# EUROPEAN PATENT SPECIFICATION

(11) **EP 4 330 079 B1**
(45) Date of publication and mention of the grant of the patent: **07.05.2025**
(21) Application number: 22711614.2
(22) Date of filing: 07.03.2022
(51) Int. Cl.: B60P 3/20, F25D 11/00, F25D 23/06

(54) **LOADING COMPARTMENT PROVIDED WITH MODULAR COLD ROOM**
LADEFACH MIT MODULAREM KÜHLRAUM
COMPARTIMENT DE CHARGEMENT DOTÉ D'UNE CHAMBRE FROIDE MODULAIRE

(30) Priority: 23.03.2021 IT 202100006956
(43) Date of publication of application: 06.03.2024
(73) Proprietor: Vantea S.p.A., 00131 Roma (RM) (IT)
(72) Inventor: VEGLIONI, Simone, 00131 Roma (RM) (IT); MELARA, Samuele, 00131 Roma (RM) (IT)
(74) Representative: Fiammenghi, Eva
(86) International application number: PCT/IB2022/051994
(87) International publication number: WO 2022/200893

(56) References cited:
- GB-A- 2 211 922
- US-A- 2 534 272
- US-A- 2 677 244
- US-B1- 6 606 875

## Description

### Technical field

The present invention relates to the field of transportation of goods by road, rail or sea by means of a van, truck, trailer, semi-trailer and any other means capable of transporting goods fully loaded or in small batches. More precisely, the loading compartment of the means of transport, modular in various parts and provided with an equally adjustable cold room, is the object of the present patent application.

### Prior art

Means of transport with built-in cold rooms and refrigeration systems are well known in the current state of the art. An example thereof is the United States Patent US1966164A which improves the system of the travel refrigerator by providing it with compartments for storing and transporting perishable goods, said compartments are connected to a refrigeration duct with flexible construction so as to allow the swinging and rotary movements of the truck. However, nothing seems to have been claimed on the market and in the patent industry to allow a complete modulation of the goods storage spaces, same case applying to volumetric adjustment of the cold rooms arranged on the loading deck inside the vehicle. The inventions patented up to now with respect to the transportation of goods at controlled temperature are limited to describing vehicles provided with refrigerated cargo compartments which can possibly be separated from the main body of the means of transport, and therefore can be classified as removable, but never modular, like in the case of the Chinese patent CN204415225U "*Large cold-storage carrier vehicle*".

The rules for the transportation of goods at controlled temperature provide for some unavoidable travel conditions, such as temperature and hygiene standards: as regards chilled foods a temperature of 0°C -5°C must be guaranteed, as pertains to meat it must be comprised between 3°C - 7°C, storage areas must be delimited according to the shelf life of each product, fresh vegetables cannot be stored near dairy products. Knowledge of the legislation of the industry clearly shows the usefulness of the present invention and the positive impact thereof in the logistic management of freight transport. The sizeable number of goods required by large commissioning companies and individuals, their varied quality and type, the dynamism of orders, which can be cancelled, modified or updated continuously, force the courier to be equally dynamic and versatile in the organisation of the loading compartment spaces. The volume adjustment of the cold rooms ensures a smart and quick modulation of the spaces so that the means of transport can be easy to reorganise according to the various orders received by the courier. US 2 677 244 A discloses a loading compartment similar to the preamble of claim 1.

### Description of the invention

According to the present invention a loading compartment provided with a modular cold room which effectively solves the aforementioned problems is provided. Thanks to the equipment included in the present invention, the loading compartment in question is the first one capable of allowing the carrier to transport goods requiring different temperature regimes. The loading compartment provided with modular cold room comprises:
- at least an insulating movable panel for closing the cold room, a panel which slides on at least a pair of side guides potentially covering the entire longitudinal extension of the loading compartment;
- a plurality of further movable insulating panels, identical and parallel to the aforementioned movable insulating panel, also suitable to slide along the same pair of guides so as to divide the modular cold room into different volumes, each with the exact volume desired by the carrier;
- at least two side panels which can be fixed, telescopic, movable or removable;
- at least a perforated flooring arranged to cover the evaporation coil;
- at least an evaporation coil arranged along the loading compartment deck.

Said evaporation coil can take two different structures: it can be irreversibly extended along the loading deck and provided with a several valves and thermostats suitable to keep the modular cold rooms at the desired temperature, or include an alternative refrigeration system as a function of which the loading deck must be provided with an evaporation coil suitable to be reversibly extended or folded along the extension of the loading compartment.

The aforementioned devices allow the carrier to organize the spaces of the loading compartment according to the requirements thereof, allowing to decide to:
a) prepare the loading compartment for transportation of goods fully at room temperature,
b) to opt for a transportation of goods fully requiring a controlled temperature,
c) divide the loading compartment into distinct sections suitable to accommodate a load of goods which require different temperature regimes.

Let us take a closer look at the three different assumptions:
a) when the carrier has a batch of goods which fully requires transportation at room temperature, then the carrier can organise the loading compartment so as to ensure such a thermal regime in the entire extension thereof by sliding the movable insulating wall longitudinally, so as to arrange it in a position leaning against the fixed front insulating wall. In this configuration, the loading compartment is without partition panels along the extension of the deck;
b) when the carrier has a batch of goods which fully requires transportation at controlled temperature, the carrier can activate the motor of the cold room, so as to allow the evaporation coil to cool the loading compartment along the entire extension thereof; the movable insulating wall will once again be arranged in a position leaning against the front fixed insulating wall. In this configuration, the loading compartment is without partition panels along the extension of the deck;
c) the third assumption has a wider application given that it allows the vector to choose to differentiate the temperature regimes between the different cold rooms using the same evaporation coil.

It should be borne in mind that the modulability of the cold room is ensured by the central movable panel which slides along the entire extension of the loading compartment by means of side guides, allowing the carrier to choose the size of the cold room. After choosing the desired width, the cold room is delimited by reversibly fixing the central movable panel to the guides, to the side walls or to both structures, thus ensuring the closure of the cold room and the thermal insulation of the section; the loading compartment thus delimited is divided into two separate autonomous and modular cold rooms. It should also be borne in mind that, where necessary, there are present a plurality of further movable insulating panels, identical and parallel to the aforementioned movable insulating panel, also designed to slide along the same pair of guides and suitable to create further modular cold rooms each with the exact volume desired by the carrier. The evaporation coil is extended along the loading deck and it is provided with a plurality of valves and thermostats suitable to allow to maintain the various modular cold rooms at the temperature desired by the carrier. This occurs by manually or automatically activating the valves and thermostats present along the coil, which thus allow an autonomous thermal control of the various sections of the evaporation coil. The various cold rooms thus obtained may accommodate goods requiring different temperature regimes. In the latter case, under c) the carrier may also use a section of the loading compartment excluded from the perimeter of the modular cold room to transport goods at room temperature, while the remaining cubic capacity will be included in the volume protected by the modular cold room.

The loading compartment may include an alternative refrigeration system with respect to that subject of the present study. The system illustrated so far has a coil stably arranged along the extension of the loading compartment and it is provided with valves and thermostats which allow to modulate the degree of refrigeration introduced by the same in the various cold rooms. In this second variant, on the other hand, in order to allow the variability of the cubic capacity of the various cold rooms without the aid of valves and thermostats, the loading compartment must be provided with at least an evaporation coil suitable to be extended or folded along the extension of the loading compartment chosen to be used as a cold room. The coil may consist of any material suitable to ensure such elasticity; it concentrates the cooling capacity thereof in the section of the loading compartment subject of refrigeration. It is clear that the modular refrigeration coil allows, in the extended configuration thereof, the potential use of the entire extension of the loading compartment as a cold room; it is also clear that concentrating the evaporation coil in a smaller loading compartment will allow to use a section of the compartment as desired as a cold room, while the excluded section will remain at room temperature.

The loading compartment must have a substantially parallelepiped shape obtained by approaching at least six insulating panels organized with respect to each other so as to delimit the six faces of the parallelepiped suitable to define the volume of the modular cold room. The insulating walls comprise at least a pair of side insulating panels, at least a covering insulating panel suitable to close - at the upper part - the modular cold room being engaged with the side panels; at least two transverse insulating panels suitable to complete the thermal insulation of said modular cold room; such walls can be fixed, telescopic or removable.

At least a fan may be provided to support the activity carried out by the coil, so as to distribute the air more effectively throughout the vertical extension of the cold room. The compartment comprises - on the lower side thereof - a perforated flooring arranged to cover the evaporation coil, suitable to protect the coil when the goods are loaded into the deck; the perforated flooring also allows the circulation of the refrigerated air introduced by the evaporation coil into the space to be cooled. The refrigeration system of the modular cold room can be activated and deactivated mechanically or automatically, upon the passage of the central closing panel of the cold room. Manual or automatic activation of the fans may also be provided for. Lastly, the last accessory that makes the system in question up with the times, is an App which, when installed on the electronic device of the carrier, signals alarms and anomalies related to the condition of the goods and the temperature of the cold rooms directly to the driver, to the end customer and to a safety monitoring center. The App notifies the user of the signals related to the temperature of the modular cold rooms receiving the information directly from the thermal sensors installed inside the loading compartment, the thermal sensors interface with a control unit suitable for comparing the data with pre-set temperature values so as to detect and signal the changes.

The advantages offered by the present invention are apparent in the light of the description set forth herein and will be further clarified by the accompanying figures and the detailed description thereof.

### Description of the figures

The invention will be described hereinafter in at least a preferred embodiment by way of non-limiting example and with the aid of the attached figures, wherein:

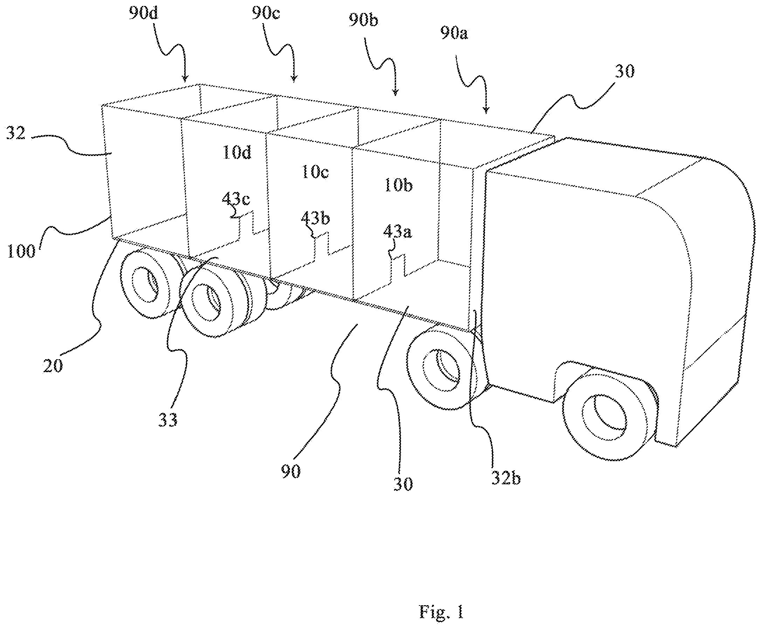

- FIGURE 1 shows the loading compartment 100 divided into four distinct modular cold rooms 90a, 90b, 90c, ... by means of a plurality of further movable insulating panels 10c, 10d, 10e, ..., six insulating panels organized so as to delimit the six faces of the parallelepiped suitable to define the volume of the modular cold room 90, a pair of insulating side panels 30, a covering insulating panel 31 suitable to close - at the upper part - said modular cold room, two transverse insulating panels 32; 32b suitable to complete the thermal insulation of said modular cold room, a movable insulating panel 10b suitable to regulate the longitudinal extension of the modular cold room 90.

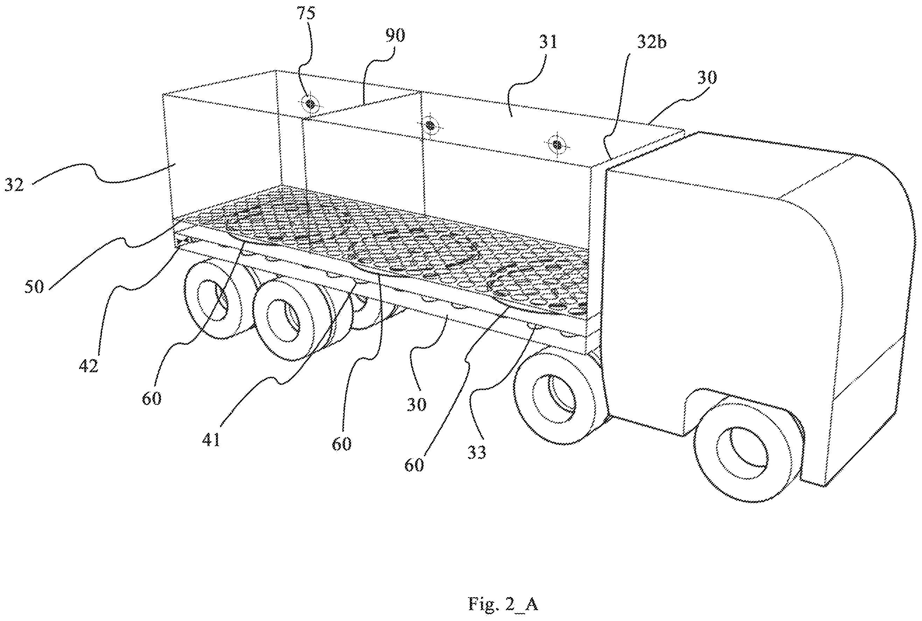

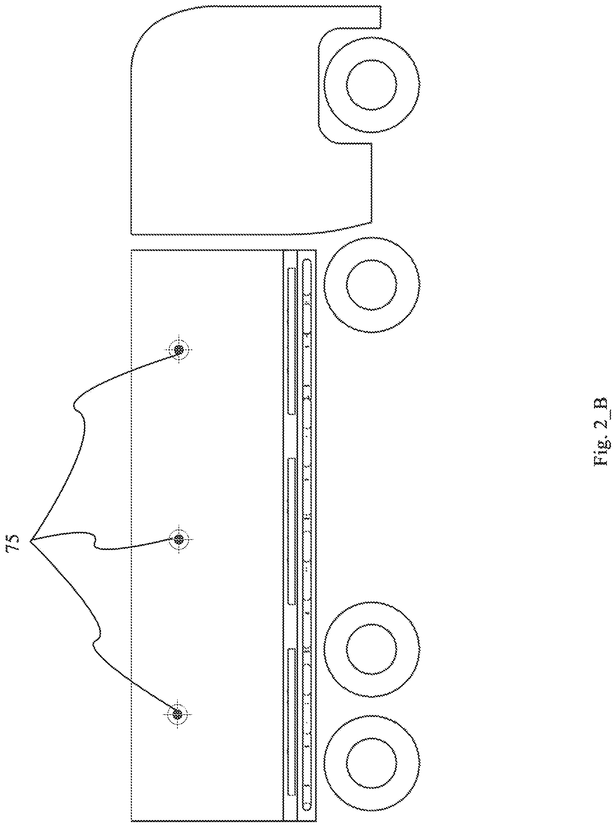

- FIGURE 2 shows an evaporation coil 40 positioned along the deck of the loading compartment 100, a plurality of valves and thermostats 42 fitted to said evaporation coil 40, a perforated flooring 50 arranged to cover the evaporation coil, three fans 60 suitable to distribute the refrigerated air more uniformly in the cold room, a plurality of turns 41.

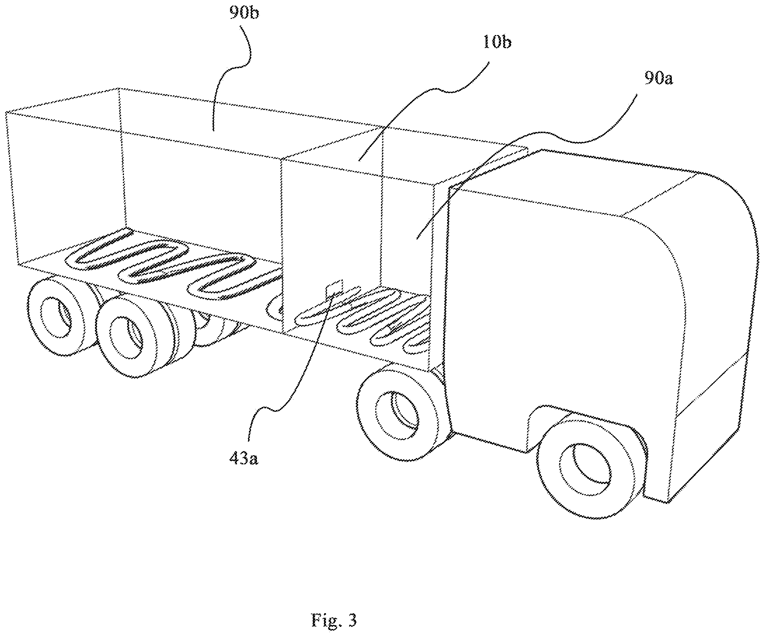

- FIGURE 3 shows two modular cold rooms 90a; 90b obtained thanks to the sliding of the movable insulating panel 10b suitable to adjust the volumetric division of the modular cold room 90 and to delimit the volumes of the two modular cold rooms 90a, 90b, a common access opening 40b arranged on at least one of the insulating panels to close the cold room.

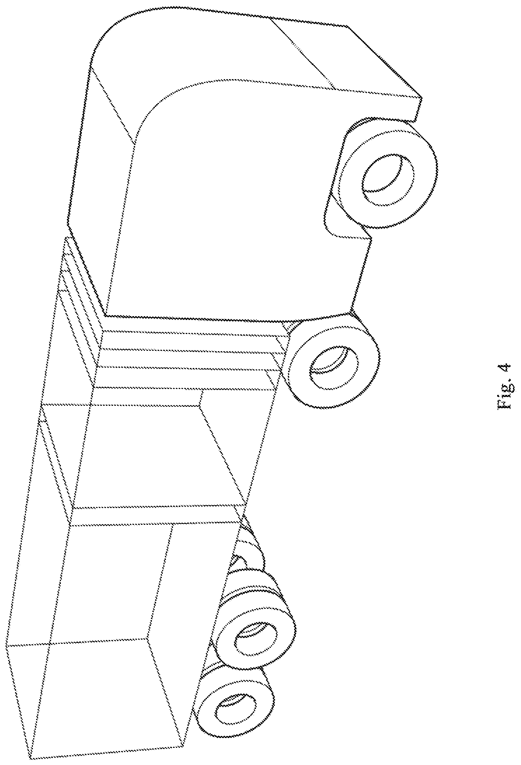

- FIGURE 4 shows an exemplifying instant of the sliding by means of guides 20 of the movable insulating panel 10b suitable to divide the volume of the modular cold room 90 into further modular cold rooms 90a and 90b.

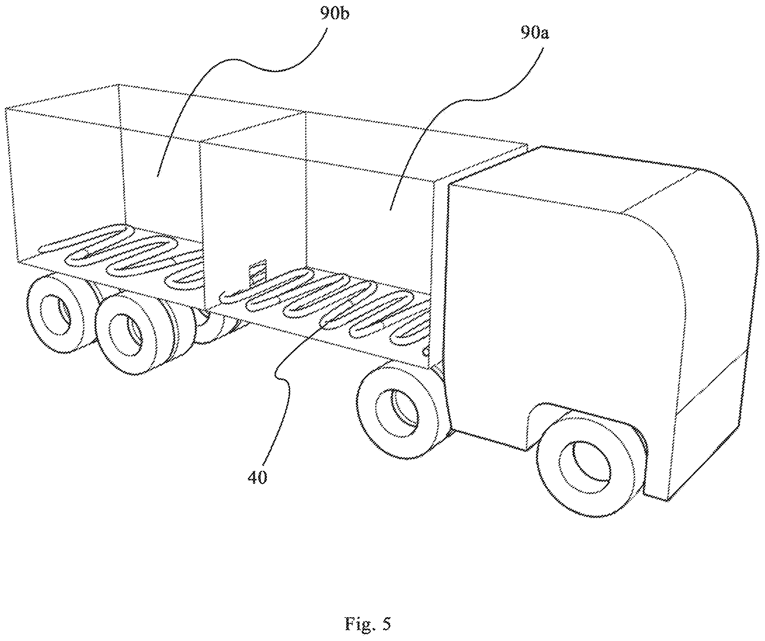

- FIGURE 5 shows the loading compartment 100 as illustrated in the second assumption of refrigeration system of the paragraph relating to the description of the invention, under b): loading compartment 100 fully used as a cold room and characterized by the presence of various modular cold rooms 90a, 90b, 90c, ... and various temperature regimes among the various cold rooms provided for. The result is obtained by using the evaporation coil 40 but concentrating a greater extension thereof inside the cold room which requires a lower temperature.

### Detailed description of the invention

The present invention will now be illustrated by way of non-limiting or binding example, using the figures which illustrate some embodiments in relation to the present inventive concept.

With reference to figure 1, the structure and components of the loading compartment with a modular cold room is shown in the preferred embodiment. Therefore, the loading compartment 100 consists of: a substantially parallelepiped shape obtained by approaching at least six insulating panels. The insulating panels are organized with respect to each other so as to delimit the six faces of the parallelepiped, so as to define the volume of the modular cold room 90. The insulating panels comprise: a pair of insulating side panels 30, at least one covering insulating panel 31 suitable to close - at the upper part - the modular cold room 90, two transverse insulating panels 32 and 32b suitable to complete the thermal insulation of the modular cold room 90. The loading compartment 100 is also provided with a movable insulating panel 10b suitable to divide the volume of the modular cold room 90. Figure 1 also shows a plurality of further movable insulating panels 10c, 10d identical and parallel to the movable insulating panel 10b, also suitable to slide along the pair of guides 20 so as to create further modular cold rooms 90b, 90c, 90d, each of the exact volume desired by the vector. Said further movable insulating panels 10c, 10d, when not used to divide the loading compartment 100 into a plurality of modular cold rooms 90b, 90c, 90d, reversibly lean against the rear face 11 of the movable insulating panel 10b and, therefore matching, may be positioned so as to reversibly adhere to the transverse insulating wall 32. In this manner, the loading compartment 100 will be free of partitioning insulating panels 10b, 10c, 10d along the entire extension thereof and the loading deck will be vacant.

Figure 2 shows the loading compartment 100 comprising an evaporation coil 40 positioned along the floor of the loading compartment 100 and provided with several valves and thermostats 42 suitable to maintain the temperature of the modular cold rooms 90a, 90b, 90c, 90d to the desired by the vector. This result is obtained by manually or automatically activating the valves and thermostats 42 which allow an autonomous thermal control of the various sections of the evaporation coil 40. The perforated flooring represented in the figure 2 is arranged to cover the evaporation coil 40, being suitable to protect the coil when the goods are loaded into the deck; furthermore, it allows the circulation of the refrigerated air introduced by the evaporation coil 40 into the space to be cooled. The system illustrated herein also provides for the installation of three fans 60 distributed along the lower side of the loading compartment 100, also protected by the perforated flooring 50; the fans support the refrigeration activity carried out by the coil 40, so as to distribute the air more effectively throughout the volume of the modular cold room 90 or of the further modular cold rooms 90a, 90b, 90c, 90d.

Figure 4 shows the sliding of the movable insulating panel 10b along the extension of the loading compartment 100. As a matter fact, the modulability of the cold room is ensured by the central movable panel which slides along the entire extension of the deck of the loading compartment 100 by means of guides 20, therefore allowing the carrier to choose the cubic capacity of the modular cold room 90. After choosing the desired width, the cold room 90 is delimited by reversibly fixing the central movable panel 10b to the guides 20, to the side walls 30 or to both structures, ensuring the closure of the cold room and the thermal insulation of the section. The final result of the sliding of the movable insulating panel 10b is shown in figure 3 where, thanks to said sliding, there are formed two separate modular insulating cells 90a and 90b, which can be subjected to two different temperature regimes thanks to the presence of the valves and thermostats 42 provided with the evaporation coil 40; the modular cold room 90b can, at the discretion of the carrier, be used to transport goods at room temperature or goods requiring a controlled temperature. In the preferred embodiment thereof, the refrigeration system of the modular cold room is automatically activated and deactivated upon the passage of the movable insulating panel 10b, same case applying to the auxiliary fans 60.

Lastly, in a further embodiment each cold room 90 may be further partitioned by installing a raised loading deck which can be reversibly installed at half a height of a cold room so as to create two sub-portions of the cold room, increasing the loading capacity of the means for transporting the goods.

Lastly, it is clear that modifications, additions or variations which are obvious to a person skilled in the art may be applied to the invention described heretofore without departing from the scope of protection provided by the attached claims.

## Claims

1. Loading compartment (100) provided with a modular cold room (90) suitable for the transport of goods requiring different temperature regimes, having is a substantially parallelepiped shape obtained by combining at least six insulating panels; said insulating panels being organized together so as to delimit the six faces of the parallelepiped suitable to define the volume of said modular cold room (90); said at least six insulating panels comprising at least a pair of side insulating panels (30), at least a covering insulating panel (31) suitable to close - at the upper part - said modular cold room (90) being engaged with said side panels (30); at least a lower insulating panel (33); at least two transverse insulating panels (32; 32b) suitable to complete the thermal insulation of said modular cold room (90); said insulating panels can be fixed, telescopic, movable or reversibly removable; said loading compartment comprising at least:
• a pair of guides (20) positioned on the deck of said loading compartment (100) suitable to allow the longitudinal sliding of a movable insulating panel (10b) along the deck;
• a said movable insulating panel (10b) suitable to divide into at least two further cold rooms (90.a-90b) through the sliding of said movable insulating panel (10b) on said guides (20); the sliding of said movable insulating panel (10b) determines the variation of the volume of said further cold rooms (90.a-90b) inside said modular cold room (90);
• on the rear face (11) of said movable insulating panel (10b) a plurality of further movable insulating panels (10c, 10d, 10e,...) identical and parallel thereto, also suitable to slide along said guides (20) so as to create additional modular cold rooms (90b, 90c, 90d,...) each with the exact volume desired by the carrier;
• a common thermal insulating access opening (43a, 43b, 43c, 43d,...) arranged on each of said insulating panels (10b, 10c, 10d,...) to ensure access to each of said modular cold rooms (90a, 90b, 90c).
**characterised in that** said further movable insulating panels (10c, 10d, 10e,...), when not used to divide said loading compartment (100) into a plurality of distinct said modular cold rooms (90b, 90c, 90d,...), are suitable to reversibly lean against the rear face of said movable insulating panel (10b) and thus aligned being suitable to be arranged so as to reversibly adhere to said transverse insulating wall (32); and
**in that** said loading compartment further comprises:
• a loading surface provided with a perforated flooring (50) suitable to protect an evaporation coil (40) when the goods are loaded into the compartment; said perforated flooring (50) suitable to allow the circulation of the refrigerated air introduced by said evaporation coil (40) into the space to be cooled;
• an evaporation coil (40) present under the deck of said loading compartment (100); said evaporation coil (40) being provided with a plurality of valves and thermostats (42) suitable to maintain said modular cold rooms (90a, 90b, 90c, 90d,...) at the desired temperature through manual or automatic activation of said valves and thermostats (42); said valves and thermostats (42) in this way allow an autonomous thermal control of the different sections of said evaporation coil (40) at each of said valves and thermostats (42).

2. Loading compartment (100) provided with a modular cold room (90), according to the preceding claim 1, **characterized in that** said evaporation coil (40) is suitable to refrigerate said modular cold room (90) and suitable to manually or automatically take a first extended configuration in which the turns (41) of said coil (40) are homogeneously distributed throughout the deck and ensure the refrigeration of the entire volumetric extension of the modular cold room (90); said evaporation coil (40) being also susceptible to take a second folded configuration in which the entire extension of said evaporation coil (40) is concentrated at said modular cold room (90) of said loading compartment (100) thus allowing the use of at least a further portion of said loading compartment (100) for the transport of goods at room temperature, without having to resort to the aid of said valves and thermostats (42).

3. Loading compartment (100) provided with a modular cold room (90), according to the preceding claim 1, **characterized in that** said evaporation coil (40) is suitable to refrigerate said modular cold room (90) and suitable to manually or automatically take a first extended configuration in which the turns (41) of said coil (40) are homogeneously distributed throughout the deck and ensure the cooling of the entire volumetric extension of said loading compartment (100); said evaporation coil (40) being also suitable to take a second folded configuration in which a greater portion of said evaporation coil (90) is concentrated at said modular cold room (90a), while a smaller portion of coil (40) continues to occupy the remaining part of the deck of the loading compartment (100) thus allowing the use of at least one said further modular cold room (90b) of said loading compartment (100) for the transport of refrigerated goods at a different temperature than the degrees present in said modular cold room (90a), without having to resort to the aid of said valves and thermostats (42).

4. Loading compartment provided with a modular cold room (90), according to the preceding claim 2, **characterized in that** at least one of said insulating panels (10b, 10c, 10d,...) is connected to a turn (41) of said evaporation coil (40); the movement of said insulating panel (10) determining the concentration or extension of at least a portion of said evaporation coil (40) thus ensuring the reversibility of the movement of the modular cold room (90a, 90b, 90c,...).

5. Loading compartment provided with a modular cold room (100) according to any one of the preceding claims, **characterized in that** it comprises at least a raised loading deck suitable to be reversibly installed in any modular cold room (90) so as to divide said modular cold room (90) into two portions, one superimposed on the other.

6. Loading compartment provided with a modular cold room (100) according to any one of the preceding claims, **characterized in that** the refrigeration system of said modular cold room (90a, 90b, 90c,...) is reversibly activated automatically upon passage of said movable insulating panel (10b, 10c, 10d,...) on said side guides (20) thanks to the use of motion sensors.

7. Loading compartment provided with a modular cold room (100), according to any one of the preceding claims, **characterized in that** it comprises the aid of at least a fan (60), suitable to distribute the refrigerated air more uniformly throughout the entire volume of said modular cold room (90).

8. Loading compartment provided with a modular cold room (100) according to any one of the preceding claims, **characterized in that** the insulating panels are telescopic, therefore movable, walls.

9. Loading compartment provided with a modular cold room (100) according to any one of the preceding claims, **characterized in that** the insulating panels are removable.

10. Loading compartment provided with a modular cold room (100) according to any one of the preceding claims, **characterized in that** the common thermal insulating access openings (43a, 43b, 43c, 43d,...) can be suitably positioned along the side panels of the loading compartment.

11. Loading compartment provided with a modular cold room (100) according to any one of the preceding claims, **characterized in that** it comprises an App installed on the electronic device of the carrier that signals alarms and anomalies relating to the condition of the goods and the temperature of the modular cold rooms ( 90a, 90b, 90c,...) directly to the driver and to the end customer and to a safety monitoring center; said App notifies the user of the signals relating to the temperature of the modular cold rooms (90a, 90b, 90c,...) directly received by the thermal sensors (75) installed inside the loading compartment (100), said thermal sensors (75) interface with a control unit suitable to compare data with pre-set temperature values so as to detect, record and report changes.

## Patentansprüche

1. Ladefach (100), das mit einem modularen Kühlraum (90) versehen ist, der für den Transport von Waren geeignet ist, die unterschiedliche Temperaturregime erfordern, und im Wesentlichen eine Parallelepiped-Form aufweist, die durch Kombinieren von zumindest sechs isolierenden Platten erhalten wird; wobei die isolierenden Platten so zusammen angeordnet sind, dass sie die sechs Seiten des Parallelepipeds geeignet begrenzen, um das Volumen des modularen Kühlraums (90) zu definieren; wobei die zumindest sechs isolierenden Platten umfassen zumindest ein Paar seitliche isolierende Platten (30), zumindest eine abdeckende isolierende Platte (31), die geeignet ist, den modularen Kühlraum (90) im oberen Teil zu verschließen, und die mit den seitlichen Platten (30) in Eingriff steht; zumindest eine untere isolierende Platte (33); zumindest zwei quer verlaufende isolierende Platten (32; 32b), die geeignet sind, die thermische Isolierung des modularen Kühlraums (90) zu vervollständigen; wobei die isolierenden Platten fixiert, teleskopisch, beweglich oder reversibel entfernbar sein können; wobei das Ladefach zumindest aufweist:
• ein Paar Führungen (20), die auf dem Deck des Ladefachs (100) positioniert sind und geeignet sind, um das Längsgleiten einer beweglichen isolierenden Platte (10b) entlang des Decks zu ermöglichen;
• eine bewegliche isolierende Platte (10b), die geeignet ist, durch das Verschieben der beweglichen isolierenden Platte (10b) auf den Führungen (20) in zumindest zwei weitere Kühlräume (90.a-90b) zu unterteilen; wobei das Verschieben der beweglichen isolierenden Platte (10b) die Veränderung des Volumens der weiteren Kühlräume (90.a-90b) innerhalb des modularen Kühlraums (90) bestimmt;
• auf der Rückseite (11) der beweglichen isolierenden Platte (10b) mehrere weitere bewegliche isolierende Platten (10c, 10d, 10e, ..) identisch und parallel dazu, die ebenfalls geeignet sind, entlang der Führungen (20) zu gleiten, um zusätzliche modulare Kühlräume (90b, 90c, 90d, ...) zu schaffen, die jeweils genau das von dem Frachtführer gewünschte Volumen aufweisen;
• eine gemeinsame wärmeisolierende Zugangsöffnung (43a, 43b, 43c, 43d, ...), die an jeder der isolierenden Platten (10b, 10c, 10d, ...) angeordnet ist, um den Zugang zu jedem der modularen Kühlräume (90a, 90b, 90c) zu gewährleisten,
**dadurch gekennzeichnet, dass** die weiteren beweglichen isolierenden Platten (10c, 10d, 10e, ...), wenn sie nicht verwendet werden, das Ladefach (100) in mehrere unterschiedliche modulare Kühlräume (90b, 90c, 90d, ...) zu unterteilen, geeignet sind, sich reversibel an die Rückseite der beweglichen isolierenden Platte (10b) zu lehnen, und somit ausgerichtet sind, dass sie geeignet sind, so angeordnet zu werden, dass sie reversibel an der quer verlaufenden isolierenden Wand (32) haften; und dadurch, dass das Ladefach weiterhin aufweist:
• eine Ladefläche, die mit einem perforierten Bodenbelag (50) versehen ist, der geeignet ist, eine Verdampferschlange (40) zu schützen, wenn die Waren in das Fach geladen werden; wobei der perforierte Bodenbelag (50) geeignet ist, die Zirkulation der gekühlten Luft zu ermöglichen, die durch die Verdampferschlange (40) in den zu kühlenden Raum eingeleitet wird;
• eine Verdampferschlange (40), die sich unter dem Deck des Ladefachs (100) befindet; wobei die Verdampferschlange (40) mit mehreren Ventilen und Thermostaten (42) versehen ist, die geeignet sind, die modularen Kühlräume (90a, 90b, 90c, 90d, ...) durch manuelle oder automatische Aktivierung der Ventile und Thermostate (42) auf der gewünschten Temperatur zu halten; wobei die Ventile und Thermostate (42) auf diese Weise eine autonome thermische Steuerung der verschiedenen Abschnitte der Verdampferschlange (40) an jedem der Ventile und Thermostate (42) ermöglichen.

2. Ladefach (100), das mit einem modularen Kühlraum (90) versehen ist, gemäß dem vorangehenden Anspruch 1, **dadurch gekennzeichnet, dass** die Verdampferschlange (40) geeignet ist, den modularen Kühlraum (90) zu kühlen, und geeignet ist, manuell oder automatisch eine erste ausgedehnte Konfiguration einzunehmen, in der die Windungen (41) der Schlange (40) gleichmäßig über das Deck verteilt sind und die Kühlung der gesamten volumetrischen Ausdehnung des modularen Kühlraums (90) sicherstellen; wobei die Verdampferschlange (40) auch dazu beeinflussbar ist, eine zweite gefaltete Konfiguration anzunehmen, in der die gesamte Ausdehnung der Verdampferschlange (40) auf den modularen Kühlraum (90) des Ladefachs (100) konzentriert ist und dadurch die Verwendung zumindest eines weiteren Abschnitts des Ladefachs (100) für den Transport von Waren bei Raumtemperatur zu nutzen, ohne auf die Hilfe der Ventile und Thermostate (42) zurückgreifen zu müssen.

3. Ladefach (100), das mit einem modularen Kühlraum (90) versehen ist, gemäß dem vorangehenden Anspruch 1, **dadurch gekennzeichnet, dass** die Verdampferschlange (40) geeignet ist, den modularen Kühlraum (90) zu kühlen, und geeignet ist, manuell oder automatisch eine erste ausgedehnte Konfiguration anzunehmen, in der die Windungen (41) der Schlange (40) gleichmäßig über das Deck verteilt sind und die Kühlung der gesamten volumetrischen Ausdehnung des Ladefachs (100) sicherstellen; wobei die Verdampferschlange (40) auch geeignet ist, eine zweite gefaltete Konfiguration einzunehmen, in der ein größerer Abschnitt der Verdampferschlange (90) an dem modularen Kühlraum (90a) konzentriert ist, während ein kleinerer Abschnitt der Schlange (40) weiterhin den verbleibenden Abschnitt des Decks des Ladefachs (100) einnimmt und dadurch die Verwendung von zumindest einem der weiteren der modularen Kühlräume (90b) des Ladefachs (100) für den Transport gekühlter Waren bei einer anderen Temperatur als den in dem modularen Kühlraum (90a) vorhandenen Graden ermöglicht, ohne auf die Hilfe der Ventile und Thermostate (42) zurückgreifen zu müssen.

4. Ladefach, das mit einem modularen Kühlraum (90) versehen ist, gemäß dem vorangehenden Anspruch 2, **dadurch gekennzeichnet, dass** zumindest eine der isolierenden Platten (10b, 10c, 10d, ...) mit einer Windung (41) der Verdampferschlange (40) verbunden ist; wobei die Bewegung der isolierenden Platte (10) die Konzentration oder Ausdehnung von zumindest einem Abschnitt der Verdampferschlange (40) bestimmt und dadurch die Reversibilität der Bewegung des modularen Kühlraums (90a, 90b, 90c, ...) gewährleistet.

5. Ladefach, das mit einem modularen Kühlraum (100) versehen ist, gemäß einem der vorhergehenden Ansprüche, **dadurch gekennzeichnet, dass** es zumindest ein erhöhtes Ladedeck aufweist, das reversibel in jedem modularen Kühlraum (90) installiert werden kann, um den modularen Kühlraum (90) in zwei Abschnitte, von denen einer über dem anderen liegt, zu unterteilen.

6. Ladefach, das mit einem modularen Kühlraum (100) versehen ist, gemäß einem der vorhergehenden Ansprüche, **dadurch gekennzeichnet, dass** das Kühlsystem des modularen Kühlraums (90a, 90b, 90c, ...) beim Passieren der beweglichen isolierenden Platte (10b, 10c, 10d, ...) auf den Seitenführungen (20) dank der Verwendung von Bewegungssensoren automatisch reversibel aktiviert wird.

7. Ladefach, das mit einem modularen Kühlraum (100) versehen ist, gemäß einem der vorangehenden Ansprüche, **dadurch gekennzeichnet, dass** es die Unterstützung von zumindest einen Ventilator (60) aufweist, der geeignet ist, die gekühlte Luft gleichmäßiger über das gesamte Volumen des modularen Kühlraums (90) zu verteilen.

8. Ladefach, das mit einem modularen Kühlraum (100) versehen ist, gemäß einem der vorhergehenden Ansprüche, **dadurch gekennzeichnet, dass** die isolierenden Platten teleskopische und daher bewegliche Wände sind.

9. Ladefach, das mit einem modularen Kühlraum (100) versehen ist, gemäß einem der vorhergehenden Ansprüche, **dadurch gekennzeichnet, dass** die isolierenden Platten entfernbar sind.

10. Ladefach, das mit einem modularen Kühlraum (100) versehen ist, gemäß einem der vorhergehenden Ansprüche, **dadurch gekennzeichnet, dass** die gemeinsamen wärmeisolierenden Zugangsöffnungen (43a, 43b, 43c, 43d, ...) in geeigneter Weise entlang der Seitenplatten des Ladefachs positioniert werden können.

11. Ladefach, das mit einem modularen Kühlraum (100) versehen ist, gemäß einem der vorhergehenden Ansprüche, **dadurch gekennzeichnet, dass** es eine App aufweist, die auf dem elektronischen Gerät des Frachtführers installiert ist und Alarme und Anomalien in Bezug auf den Zustand der Waren und die Temperatur der modularen Kühlräume (90a, 90b, 90c, ...) direkt an den Fahrer und an den Endkunden sowie an eine Sicherheitsüberwachungszentrale signalisiert; wobei die App benachrichtigt den Nutzer über die Signale in Bezug auf die Temperatur der modularen Kühlräume (90a, 90b, 90c, ..), die direkt durch die in dem Ladefach (100) installierten Wärmesensoren (75) empfangen werden, wobei die Wärmesensoren (75) mit einer Steuereinheit verbunden sind, die geeignet ist, Daten mit voreingestellten Temperaturwerten zu vergleichen, um Änderungen zu erkennen, aufzuzeichnen und zu melden.

## Revendications

1. Compartiment de chargement (100) doté d'une chambre froide modulaire (90) apte au transport de marchandises nécessitant différents régimes de température, présentant sensiblement une forme de parallélépipède obtenue en combinant au moins six panneaux isolants ; lesdits panneaux isolants étant organisés conjointement de manière à délimiter les six faces du parallélépipède apte à définir le volume de ladite chambre froide modulaire (90) ; lesdits au moins six panneaux isolants comprenant au moins une paire de panneaux isolants latéraux (30), au moins un panneau isolant de recouvrement (31) apte à fermer - au niveau d'une partie supérieure - ladite chambre froide modulaire (90) étant en prise avec lesdits panneaux latéraux (30) ; au moins un panneau isolant inférieur (33) ; au moins deux panneaux isolants transversaux (32 ; 32b) aptes à compléter l'isolation thermique de ladite chambre froide modulaire (90) ; lesdits panneaux isolants peuvent être fixes, télescopiques, mobiles ou amovibles de manière réversible ; ledit compartiment de chargement comprenant au moins :
• une paire de guides (20) positionnés sur le plateau dudit compartiment de chargement (100) aptes à permettre le coulissement longitudinal d'un panneau isolant mobile (10b) le long du plateau ;
• un dit panneau isolant mobile (10b) apte à diviser en au moins deux autres chambres froides (90.a-90b) par le coulissement dudit panneau isolant mobile (10b) sur lesdits guides (20) ; le coulissement dudit panneau isolant mobile (10b) détermine la variation du volume desdites autres chambres froides (90.a-90b) à l'intérieur de ladite chambre froide modulaire (90) ;
• sur la face arrière (11) dudit panneau isolant mobile, (10b), une pluralité d'autres panneaux isolants mobiles (10c, 10d, 10e,...) identiques et parallèles à celui-ci, également aptes à coulisser le long desdits guides (20) de manière à créer des chambres froides modulaires supplémentaires (90b, 90c, 90d, ...), chacune présentant le volume exact souhaité par le transporteur ;
• une ouverture d'accès isolante thermique commune (43a, 43b, 43c, 43d,...) agencée sur chacun desdits panneaux isolants (10b, 10c, 10d,...) pour assurer l'accès à chacune desdites chambres froides modulaires (90a, 90b, 90c).
**caractérisé en ce que** lesdits autres panneaux isolants mobiles (10c, 10d, 10e,...), lorsqu'ils ne sont pas utilisés pour diviser ledit compartiment de chargement (100) en une pluralité de dites chambres froides modulaires distinctes (90b, 90c, 90d, ...), sont aptes à reposer de manière réversible contre la face arrière dudit panneau isolant mobile (10b) et, ainsi alignés, étant aptes à être agencés de manière à adhérer de manière réversible à ladite paroi isolante transversale (32) ; et **en ce que** ledit compartiment de chargement comprend en outre :
• une surface de chargement dotée d'un plancher perforé (50) apte à protéger un serpentin d'évaporation (40) lors du chargement des marchandises dans le compartiment ; ledit plancher perforé (50) étant apte à permettre la circulation de l'air réfrigéré introduit par ledit serpentin d'évaporation (40) dans l'espace à refroidir ;
• un serpentin d'évaporation (40) présent sous le plateau dudit compartiment de chargement (100) ; ledit serpentin d'évaporation (40) étant doté d'une pluralité de vannes et de thermostats (42) aptes à maintenir lesdites chambres froides modulaires (90a, 90b, 90c, 90d,...) à la température souhaitée par activation manuelle ou automatique desdites vannes et desdits thermostats (42) ; lesdites vannes et lesdits thermostats (42) permettent ainsi une régulation thermique autonome des différentes sections dudit serpentin d'évaporation (40) au niveau de chacune desdites vannes et de chacun desdits thermostats (42).

2. Compartiment de chargement (100) doté d'une chambre froide modulaire (90), selon la revendication 1 précédente, **caractérisé en ce que** ledit serpentin d'évaporation (40) est apte à réfrigérer ladite chambre froide modulaire (90) et apte à adopter manuellement ou automatiquement une première configuration étendue dans laquelle les spires (41) dudit serpentin (40) sont réparties de manière homogène sur l'ensemble du plateau et assurent la réfrigération de l'ensemble de l'extension volumétrique de la chambre froide modulaire (90) ; ledit serpentin d'évaporation (40) étant également susceptible d'adopter une seconde configuration pliée dans laquelle toute l'extension dudit serpentin d'évaporation (40) est concentrée au niveau de ladite chambre froide modulaire (90) dudit compartiment de chargement (100) permettant ainsi l'utilisation d'au moins une autre partie dudit compartiment de chargement (100) pour le transport de marchandises à température ambiante, sans avoir recours auxdites vannes et auxdits thermostats (42).

3. Compartiment de chargement (100) doté d'une chambre froide modulaire (90), selon la revendication 1 précédente, **caractérisé en ce que** ledit serpentin d'évaporation (40) est apte à refroidir ladite chambre froide modulaire (90) et apte à adopter manuellement ou automatiquement une première configuration étendue dans laquelle les spires (41) dudit serpentin (40) sont réparties de manière homogène sur l'ensemble du plateau et assurent le refroidissement de l'ensemble de l'extension volumétrique dudit compartiment de chargement (100) ; ledit serpentin d'évaporation (40) étant également apte à adopter une seconde configuration pliée dans laquelle une plus grande partie dudit serpentin d'évaporation (90) est concentrée au niveau de ladite chambre froide modulaire (90a), en même temps qu'une plus petite partie du serpentin (40) continue d'occuper la partie restante du plateau du compartiment de chargement (100) permettant ainsi l'utilisation d'au moins une autre dite chambre froide modulaire (90b) dudit compartiment de chargement (100) pour le transport de marchandises réfrigérées à une température différente des degrés présents dans ladite chambre froide modulaire (90a), sans avoir recours auxdites vannes et auxdits thermostats (42).

4. Compartiment de chargement doté d'une chambre froide modulaire (90), selon la revendication 2 précédente, **caractérisé en ce qu'**au moins un desdits panneaux isolants (10b, 10c, 10d,...) est relié à une spire (41) dudit serpentin d'évaporation (40) ; le mouvement dudit panneau isolant (10) déterminant la concentration ou l'extension d'au moins une partie dudit serpentin d'évaporation (40) assurant ainsi la réversibilité du mouvement de la chambre froide modulaire (90a, 90b, 90c,...).

5. Compartiment de chargement doté d'une chambre froide modulaire (100) selon l'une des revendications précédentes, **caractérisé en ce qu'**il comprend au moins un plateau de chargement surélevé apte à être installé de manière réversible dans toute chambre froide modulaire (90) de manière à diviser ladite chambre froide modulaire (90) en deux parties, l'une superposée à l'autre.

6. Compartiment de chargement doté d'une chambre froide modulaire (100) selon l'une des revendications précédentes, **caractérisé en ce que** le système de réfrigération de ladite chambre froide modulaire (90a, 90b, 90c, ...) est activé de manière réversible et automatique lors du passage dudit panneau isolant mobile (10b, 10c, 10d,...) sur lesdits guides latéraux (20) grâce à l'utilisation de capteurs de mouvement.

7. Compartiment de chargement doté d'une chambre froide modulaire (100), selon l'une des revendications précédentes, **caractérisé en ce qu'**il est aidé d'au moins un ventilateur (60), apte à répartir l'air réfrigéré plus uniformément dans l'ensemble du volume de ladite chambre froide modulaire (90).

8. Compartiment de chargement doté d'une chambre froide modulaire (100) selon l'une des revendications précédentes, **caractérisé en ce que** les panneaux isolants sont des parois télescopiques, par conséquent mobiles.

9. Compartiment de chargement doté d'une chambre froide modulaire (100) selon l'une des revendications précédentes, **caractérisé en ce que** les panneaux isolants sont amovibles.

10. Compartiment de chargement doté d'une chambre froide modulaire (100) selon l'une des revendications précédentes, **caractérisé en ce que** les ouvertures d'accès isolantes thermiques communes (43a, 43b, 43c, 43d,...) peuvent être positionnées de façon adéquate le long des panneaux latéraux du compartiment de chargement.

11. Compartiment de chargement doté d'une chambre froide modulaire (100) selon l'une des revendications précédentes, **caractérisé en ce qu'**il comprend une application installée sur le dispositif électronique du transporteur qui signale des alarmes et anomalies relatives à l'état des marchandises et à la température des chambres froides modulaires (90a, 90b, 90c,...) directement au conducteur et au client final et à un centre de surveillance de la sécurité ; ladite application notifie à l'utilisateur les signaux relatifs à la température des chambres froides modulaires (90a, 90b, 90c, ...) reçus directement par les capteurs thermiques (75) installés à l'intérieur du compartiment de chargement (100), lesdits capteurs thermiques (75) assurant l'interface avec une unité de commande apte à comparer des données avec des valeurs de température préréglées de manière à détecter, enregistrer et communiquer des changements.
